# EUROPEAN PATENT APPLICATION

(11) **EP 3 539 821 A1**
(43) Date of publication of application: **18.09.2019**
(21) Application number: 17870025.8
(22) Date of filing: 08.11.2017
(51) Int. Cl.: B60P 3/04, A01K 1/00

(54) **TRANSPORTABLE STABLE**

(30) Priority: 09.11.2016 ES 201631333 U
(71) Applicant: Jose Maria, Vega Garcia, 41018 Sevilla (ES)
(72) Inventor: Jose Maria, Vega Garcia, 41018 Sevilla (ES)
(74) Representative: Lamas Menéndez, Pablo
(86) International application number: PCT/ES2017/070740
(87) International publication number: WO 2018/087411

(57) **Abstract**

Transportable stable, of the type that is made up of, at least, one container (1) with enclosures mounted in a self-supporting framework (3) of metal profiles that is comprised of perimetric enclosures (2a, 2b, 2c, 2d), consisting of larger side enclosures (2a, 2c), a front enclosure (2b) and a foldout, heavy load-bearing rear enclosure (2d); an upper enclosure (2e) and a lower weight-resistant enclosure (2f); and restraining devices, consisting of vertical partitions for stabling (7, 8) and/or interior supplementary partitions (32). At least one of the perimetric enclosures (2a, 2b, 2c, 2d) includes unfolding extensions (100) that consist of flat elements (101, 102, 103) that are joined to each other and/or to the rest of the container (1) by means of joints (110, 111, 112) that allow them to be deployed.

## Description

### PURPOSE OF THE INVENTION

This invention relates to a transportable stable.

### BACKGROUND BEHIND THE INVENTION

Today we are familiar with containers that can have a wide range of different uses, above all to hold objects in transit, while these items can vary greatly, ranging from consumer goods through to waste of all kinds.

Such containers are thus especially adapted for transportation, which is why they are not conceived to be used in a fixed location.

Some of these containers have moorings inside to strap down the load, yet they do not have moorings that are for purposes other than this.

Vehicles to convey livestock are also commonplace, where these consist of an associated motive element, featuring a chassis, wheels, an engine, etc., in addition to a driving cabin, as well as an enclosed and ventilated shipment area to hold the animals, with the drawback that this is integrated into the vehicle.

These formats of containers and livestock-bearing vehicles exhibit shortcomings given that they lack the versatility to perform both functions properly.

To overcome these problems, there is utility model number 201530760, which harbours a transportable modular container that is a prismatic structure with a quadrangular base that comprises enclosures mounted in a self-supporting framework of metal profiles. This consists of perimetric enclosures which include larger side enclosures, a front enclosure and a foldout, heavy load-bearing rear enclosure for the animals to enter, as well as an upper enclosure and a lower weight-resistant enclosure. There are also restraining devices comprising interior vertical partitions for stabling and/or supplementary partitions, while access ways, ventilation holes and/or spaces for letting light in can also be included.

Even though this fulfils its function of providing stabling for animals satisfactorily, in the case of larger animals, such as horses, the available space may be tight, or very large-scale containers are required in order to prevent this, which might prove hard to bear on the transportation platform or lorry.

### DESCRIPTION OF THE INVENTION

The transportable stable in the invention has a compact-sized configuration to allow greater ease of conveyance and can be enlarged and take up greater space to provide more features and more protection for the animals, while also incorporating attributes that facilitate moving and being borne on a lorry or a platform so that it can even be used for travelling around.

The stable is the kind that is made up of, at least, one container with enclosures mounted in a self-supporting framework of metal profiles that is comprised of perimetric enclosures, consisting of larger side enclosures, a front enclosure and a foldout, heavy load-bearing rear enclosure; an upper enclosure and a lower weight-resistant enclosure; and restraining devices, comprising interior vertical partitions for stabling and/or supplementary inside partitions. Access ways, ventilation holes and/or spaces for letting light in can also be included.

Under this basic configuration, and according to the invention, there is provision for at least one of the perimetric enclosures to have unfolding extensions featuring flat elements (which are not very thick) that are joined together and/or to the rest of the container by means of joints that enable deployment of them. Thus, after the container has been transported and off-loaded, the extensions can be unfolded to form a stable of considerable size that is suitable for protecting and stabling large animals.

Furthermore, there are extendable feet for autonomous unloading, which will facilitate loading and unloading from the lorry or platform used for transportation.

### DESCRIPTION OF THE PICTURES

Figures 1 to 8.- Separate views of a sequence of transporting, unloading and deployment or setting up of the stable in the invention
Figure 9.- A view from outside of a variant of the container for the stable in the invention that shows an interior lay-out for the stabling and/or transportation of horses. Some perimetric enclosures, as well as the upper enclosure and the unfolding extensions have been left out so as to improve visualisation.
Figure 10.- Detail of an initial interior cross-partition for stabling that is arranged inside the container for the invention's stable.
Figure 11.- Cross-sectional detail of the moorings of the first partition, shown in figure 10, to the rails of the larger side enclosures.
Figure 12.- Detail of a second interior cross-partition for stabling animals that is arranged inside the container for the invention's stable, in a closed position.
Figure 13.- Shows a lengthways horizontal section of the container in the invention with the first and second partition gates for stabling the animals in an open position for animals to access.
Figures 14 and 15.- Views from outside of another two variants of the container for the stable in the invention that show different interior lay-outs for the stabling and/or transportation of horses. Some perimetric enclosures, as well as the upper enclosure and the unfolding extensions have been left out so as to improve visualisation.
Figures 16 and 17.- These show, respectively, a view of the transportable stable in the invention in a drawn-together configuration, for transportation, and then deployed, for stabling, where you can see a variant of the principal inside partitions ranged side-to-side in a square shape. These can be arranged within the container for transportation and form boxes for the animals when the extensions are in an open position. Likewise, certain perimetric enclosures and/or the upper enclosure have been removed for the sake of better insight.

### PREFERRED FORMAT OF THE INVENTION

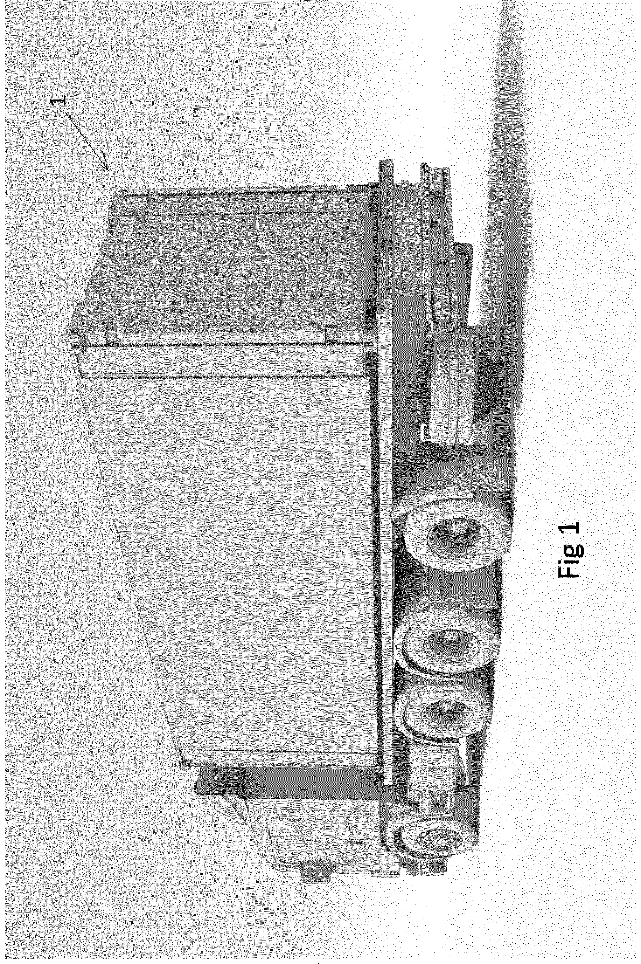

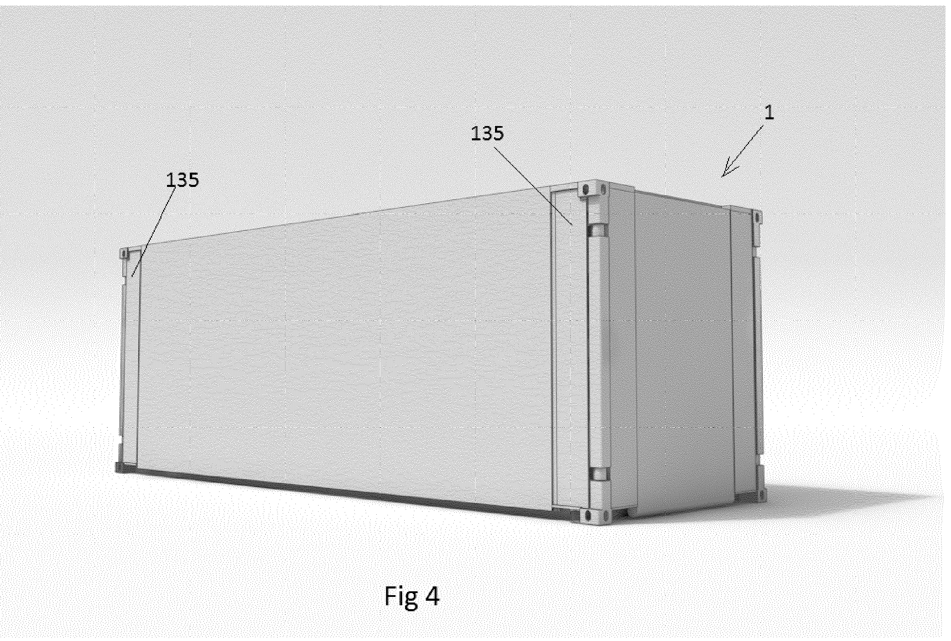

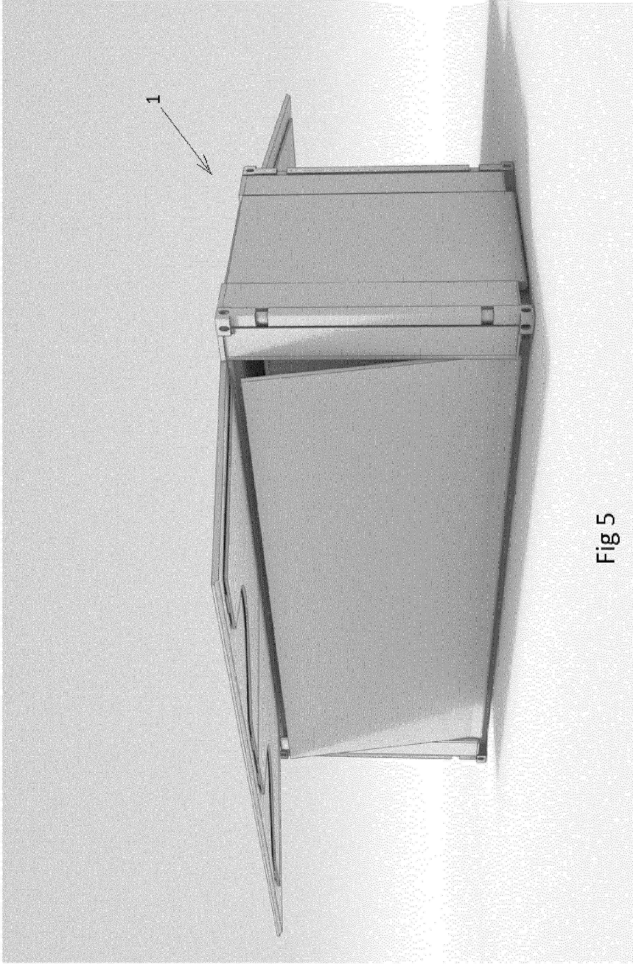

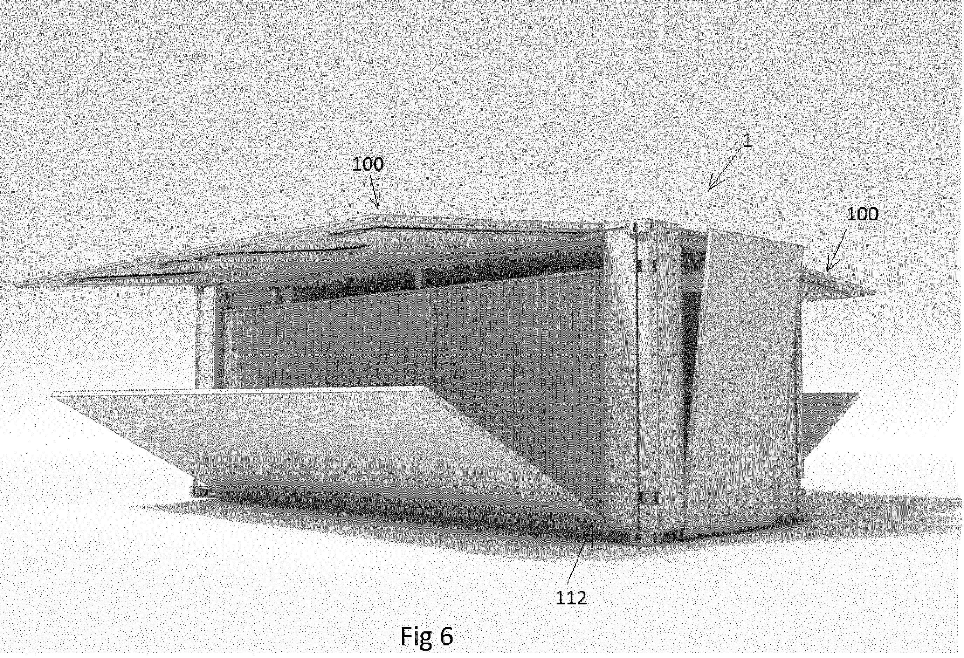

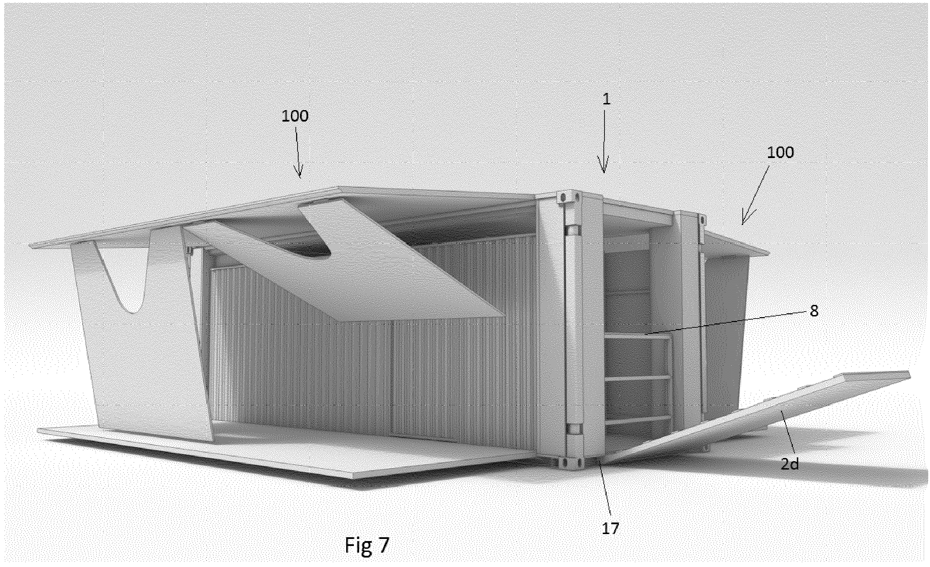

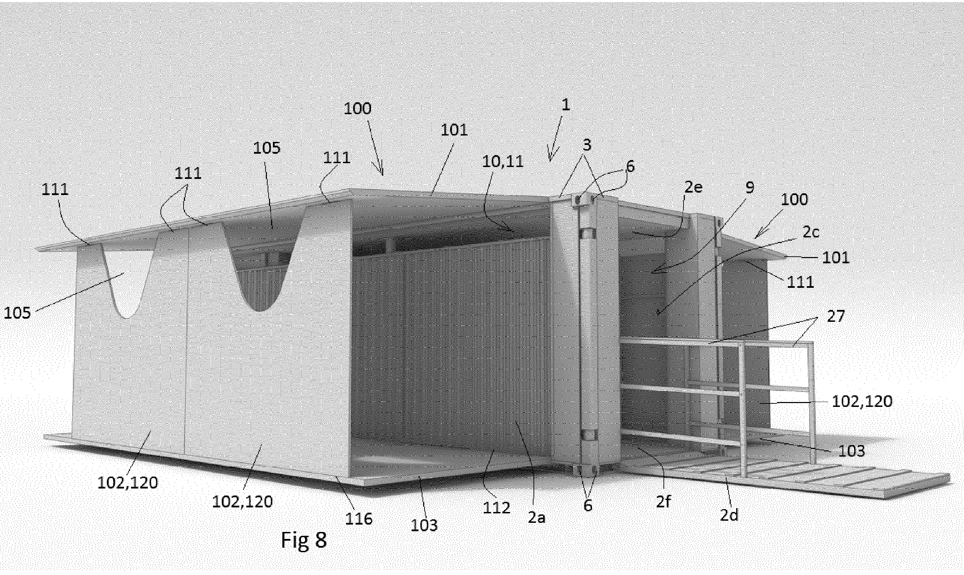

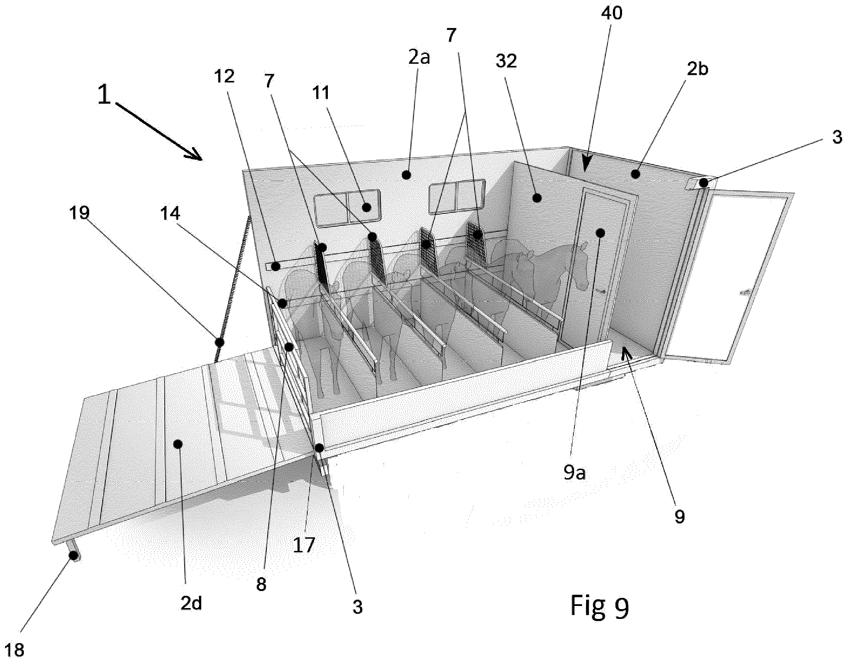

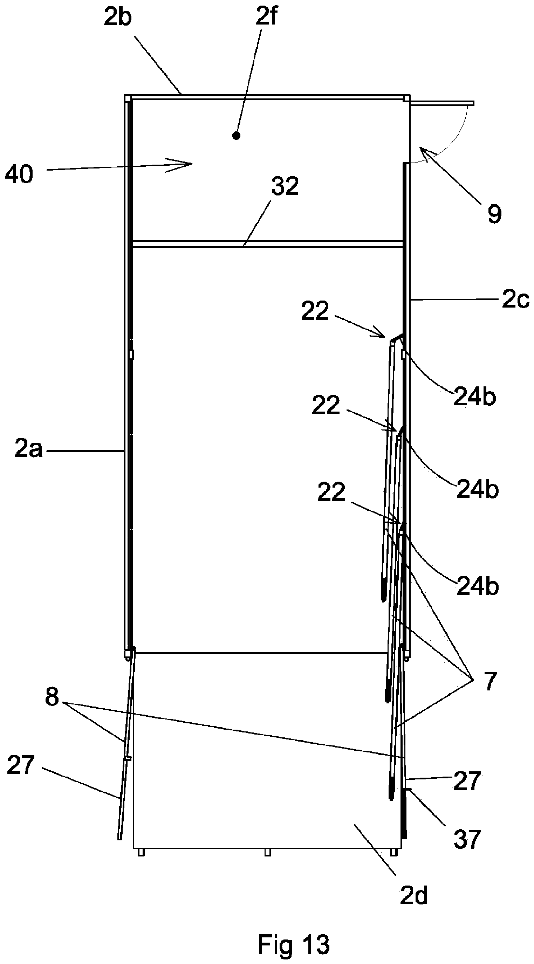

The transportable stable in this invention is, according to this example of format (see figs. 1 to 8), of the type that is made up of, at least, one prism-shaped container (1) with a quadrangular base with enclosures mounted in a self-supporting framework (3) of metal profiles that is comprised of perimetric enclosures (2a, 2b, 2c, 2d), consisting of (see fig. 8) larger side enclosures (2a, 2c), a front enclosure (2b) (see figs. 9 and 13) and a foldout, heavy load-bearing rear enclosure (2d) for access inside; an upper enclosure (2e) and a lower weight-resistant enclosure (2f) to withstand the load inside; and restraining devices consisting of inside vertical partitions (7, 8) for stabling and/or interior supplementary partitions (32) (see fig. 9). Access ways (9), ventilation holes (10) and/or spaces for letting light in (11) (which, if practicable, can also be used for ventilation) can also be included. In this, according to the invention, at least one of the perimetric enclosures (2a, 2b, 2c, 2d) includes unfolding extensions (100) that consist of flat elements (101, 102, 103) that are joined to each other and/or to the rest of the container (1) by means of joints (110, 111, 112) that allow them to be deployed to achieve greater spaciousness and additional room on the site where they are used, while these remain withheld during transport to facilitate it.

The extensions referred to (100) are ideally positioned on at least one of the larger side enclosures (2a, 2c) of the container (1) or on both, which is the variant that is shown in figures 1 to 8, since this is how to achieve the most spacious use when they are deployed.

Specifically, the extensions (100) can include (see fig. 8) rooves (101) (which, at most, could be the same width as the height of the container (1)) that are joined to the upper part of the corresponding enclosure (or structure) of the container (1) via primary joints (110); and also include means to maintain the opened out position. This makes it possible to increase the useable, covered space around the stable on both sides of the container (1) with considerable widths. The means to hold the rooves' open position (101) (in this example, and in no way are the options limited to this) consists of some supports (120) positioned at the opposite side of the roof (101) relative to the primary joints (110). These supports (120) preferably include some secondary joints (111) at the top to connect with the relevant roof (101) for smoother deployment, and ideally the supports (120) consist of additional enclosures (102) that are parallel to the container enclosures which the corresponding rooves (101) are attached to by joints, which allows further shelter for the animals put there. Moreover, it has been envisaged that the additional enclosures (102) can include windows (105) so that the animals can even poke their heads out, as with the conventional stables with a low gate.

The extensions (100) have been designed so that they can also include floors (103) (which, at most, would be the same width as the height of the container), which are joined to the lower part of the corresponding enclosure (or structure) of the container (1) via third joints (112). This makes it possible to provide a flat surface over the extended portion of the stable. Ideally, these floors (103) would also include connecting mechanisms (116) to house and stabilise the supports (120) and/or additional enclosures (102).

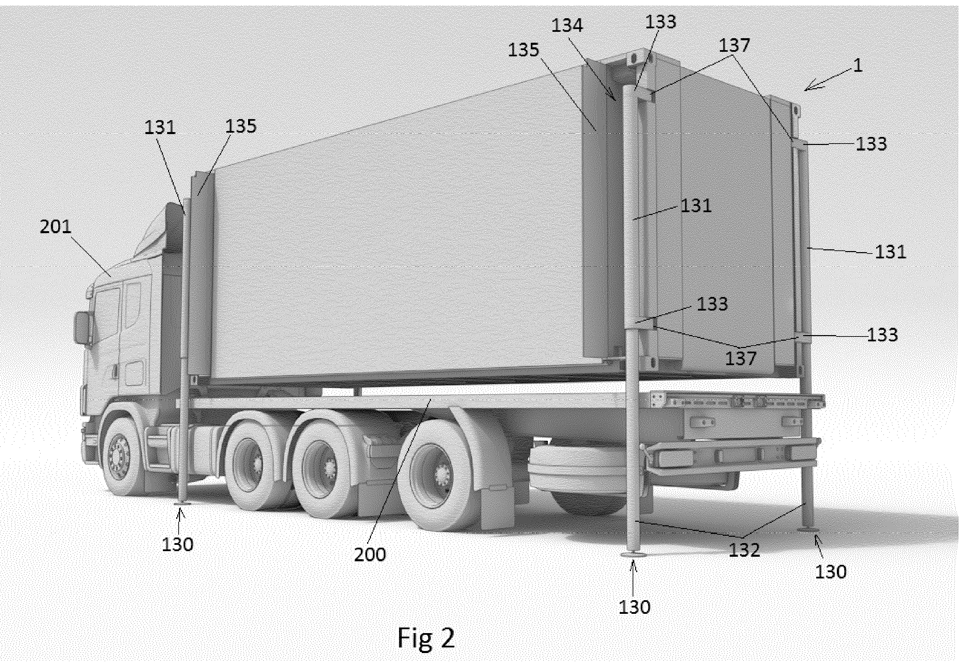

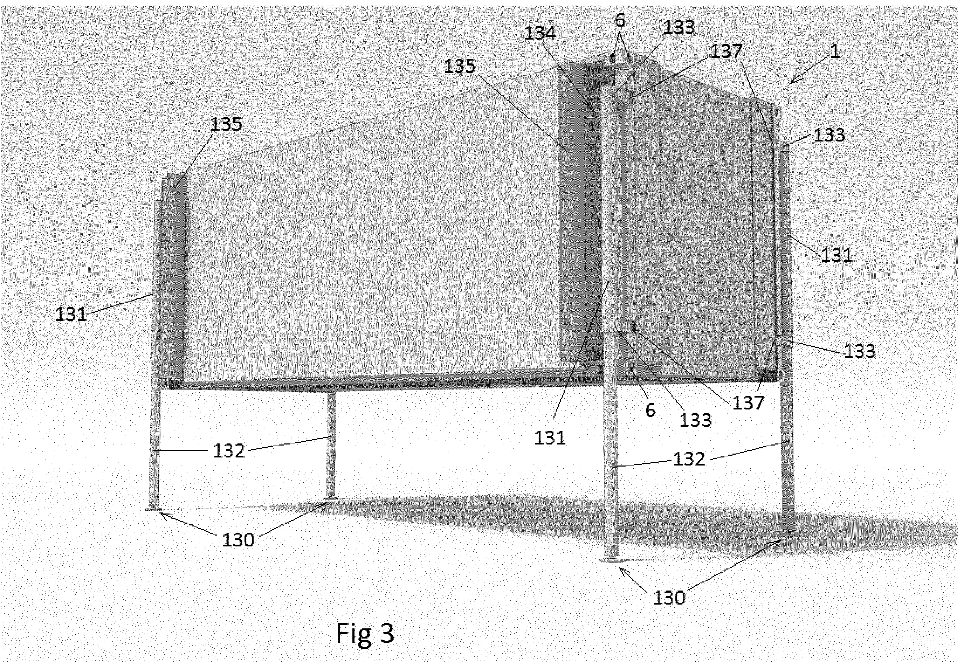

Given that the extensions increase the weight of the container (1), to facilitate the unloading of the latter, some extendable legs (130) have been provided (see figs. 2 and 3) for the off-loading to be independent. These consist of some perimetric cylinders (131), the extendable sections of which (132) point downwards and can slide out beyond the height of the load platform (200) of the container (1), such that they can lengthen and rest on the ground to raise the container (1) off the load-bearing platform (200) or lorry, thereby allowing it to come out from underneath, whereupon the container can be lowered until it rests on the ground. These cylinders (131) are ideally positioned at the corners of the container (1) so that the space they take up does not encroach on central areas of the container (1) that can be put to better use. In this preferred example of a set-up, the cylinders (131) are held in place by mountings (133) that can open out from the perimeter of the container (1). Ideally, the container (1) includes housing (134) to push the mountings (133) into and hold the cylinders (131) in an unextended position (i.e. with the extendable parts right inside the casing). These housing spaces (134) have also been designed to include covering doors (135) to avoid aerodynamic noise in transit and/or cut down on the consumption of the transporter vehicle (201). In this specific case, the mountings (133) are joined to the container (1) via a fourth set of joints (137). Even so, the container (1) can also have connecting devices (6) incorporated in the structure (3) for haulage and/or fastening to the transport vehicle.

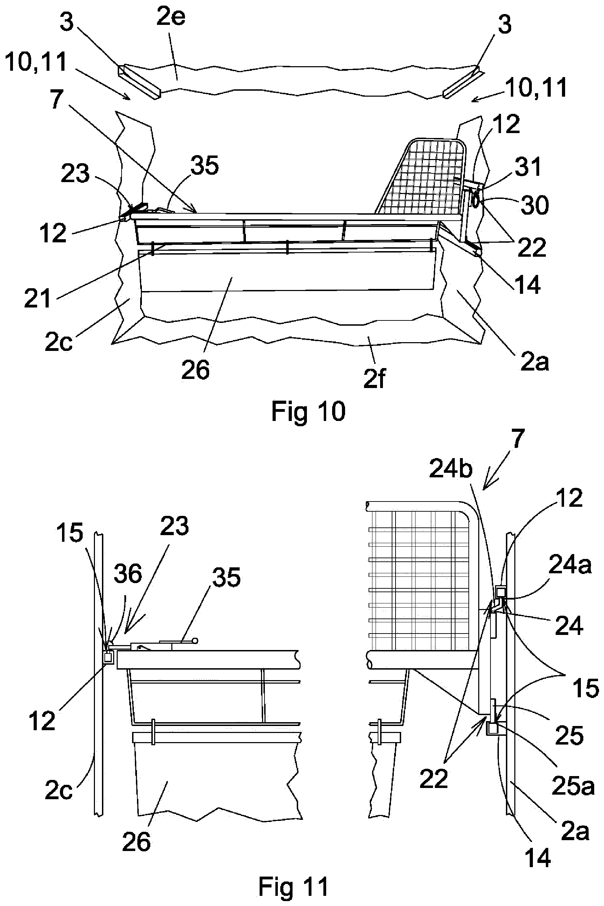

With respect to the means of fixing inside vertical partitions (7, 8) in place, these can include at least a primary rail (12) (see figs. 9 to 11) running lengthways inside along the larger side enclosures (2a, 2c). Furthermore, the fixing devices for the inside vertical partitions (7, 8) can include a second rail (14), also running lengthways inside but beneath the primary rail (12), which is ranged along at least one of the larger side enclosures (2a, 2c) in this case with the runners (15) in the primary rail (12) and the second rail (14) on the same larger enclosure (2a, 2c) facing each other on a vertical plane, as figure 11 shows in detail, although they do not have to be on the same vertical projection and can be out of line with each other. For example, in figure 11, it is noticeable that the primary rail (12) is ranged above the second rail (14) on one of the larger enclosures (2a), with its runners (15) facing each other, whereas, on the other larger enclosure (2c), there is just a single, primary rail (12) with its runner (15) pointing upwards.

The rear foldout enclosure (2d) is connected to the rest of the container (1) by means of a lower joint (17), which allows animals' access. This foldout rear enclosure (2d) can include legs on the end (18) opposite the low joint (17) that stick out underneath in the opened out position of the foldout smaller enclosure (2d), as can be seen in figure 9, so as to protect it from coming into direct contact with the ground. Moreover, this foldout rear enclosure (2d) has been designed preferably to include elements to restore the folded up or closed position, such as retaining springs (19). The foldout rear enclosure (2d) has also been designed to include closing bolts (not shown) to secure it in its closed position.

The inside stabling partitions can include a primary inner cross partition (7) (see figs. 9 to 11), which consists of a framework (21) of bars with a primary double articulated movable mooring (22) that is attached to the two interior lengthwise rails (12, 14) on one of the larger enclosures (2a) and at least a second mooring (23) opposite the first rail (12) on the larger enclosure on the opposite side (2c). The primary double articulated mooring (22) preferably comprises (see fig. 11) an upper bar (24) which is vertically joined to the framework (21) and which includes an upper end (24a) that is insertable along the primary rail (12), while this upper end (24a) can include a little runner, and a lower bar (25) which includes a lower end (25a) that is insertable along the second rail (14). The design is also such that the upper bar (24) includes an intermediate angled rod (24b) that allows all the interior primary partitions (7) to be fully folded away, as can be seen in figure 13, to move the animals in and out.

The second mooring (23) ideally features a tensioning device (35) that can be connected to a hook (36) that moves along the primary rail (12) of the opposite larger enclosure (2c), as can be seen in the detailed illustration in figure 11.

The moorings (22, 23) can include locking systems (not shown) to prevent movement lengthways along the respective rails (12, 14) to stabilise the primary inside partitions (7) in place. This interior primary partition (7) can likewise include skirting (26) underneath, which is joined at its top with the framework (21) so as to enhance the elements separating the animals while, at the same time, allowing a degree of flexibility of movement. The skirting (26) would ideally feature a section of sheeting made of a flexible material, such as rubber.

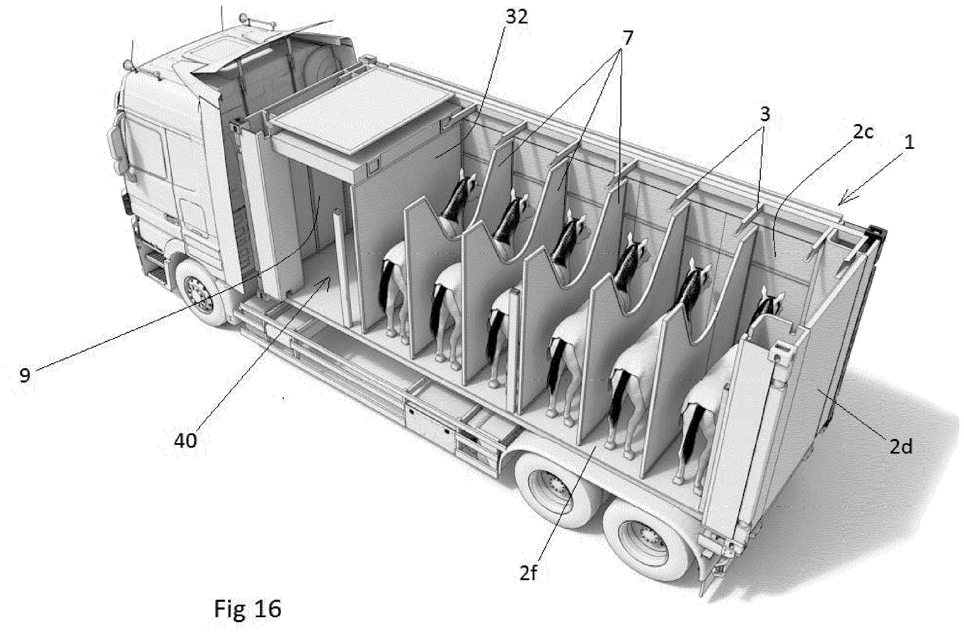

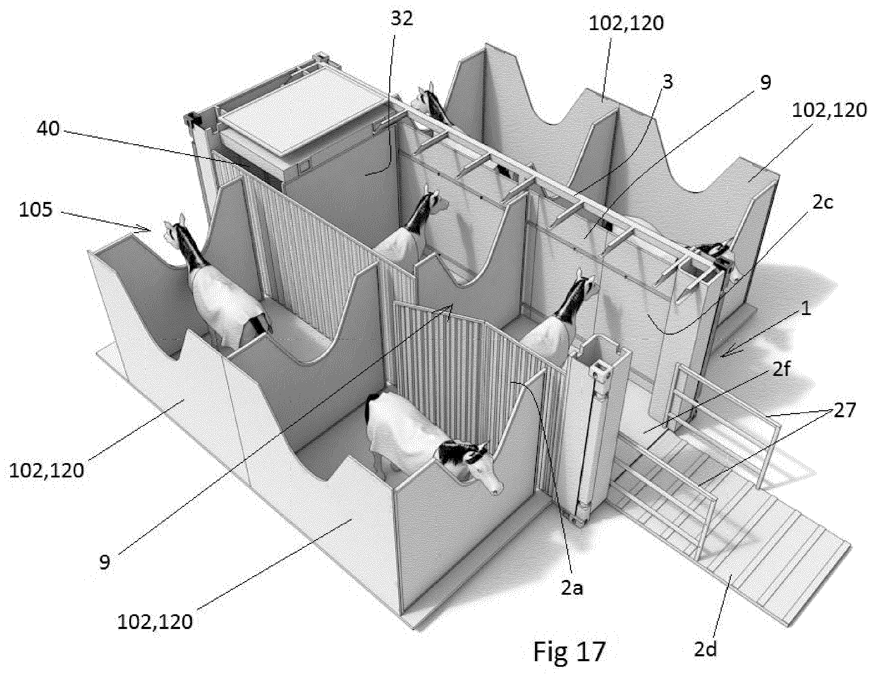

Another variant for the primary interior partitions (7) is depicted in figures 16 and 17, where they consist of sections of panelling running from side to side, which can just as easily be set up on the inside of the container (1), as can be seen in figure 16, to take up a minimum of space and separate the animals during transport, or in the areas used by the extensions (100) when these are in their deployed position, to form more spacious boxes (300) for the animals, as can be seen in figure 17. These sections of panelling also preferably include window holes (105) that are similar to those in the additional enclosures (102).

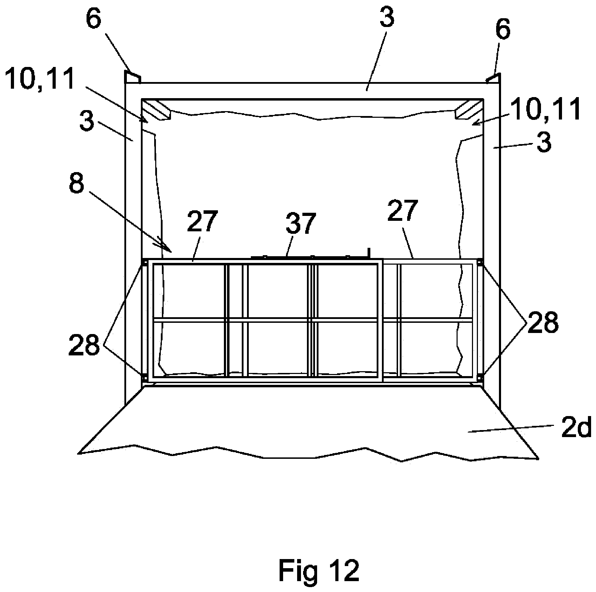

The interior stabling partitions can also include (see fig. 12) a second inside cross partition (8) that consists of at least one frame (27) with end hinges (28) to connect with one or other of the interior lengthways rails (12, 14) on the larger enclosures (2a, 2c) and/or with the top enclosure (2e) and/or with the bottom enclosure (2f) and/or with the larger side enclosures (2a, 2c), the latter being the case depicted in figure 12. In this example, this second inside partition (8) comprises two frames (27), the end hinges (28) of which are attached to the larger side enclosures (2a, 2c) of the container (1), and the frames (27) are of a width such that they can either partially or fully overlap with each other being locked in place by means of a sliding bolt (37). In their open position, these frames (27) make side railings for the animals, as can be appreciated from fig. 8.

Similarly, the container (1) in the invention can include rings (30) (see fig. 10) that feature couplings (31) with at least the primary rail (12) to tie in the animals.

Figure 9 shows the lay-out inside the container (1) of the first four partitions (7) plus a second partition (8) in the access way, to stable four horses. The purpose of this second division (8) is to separate the animal from the small foldout enclosure (2d).

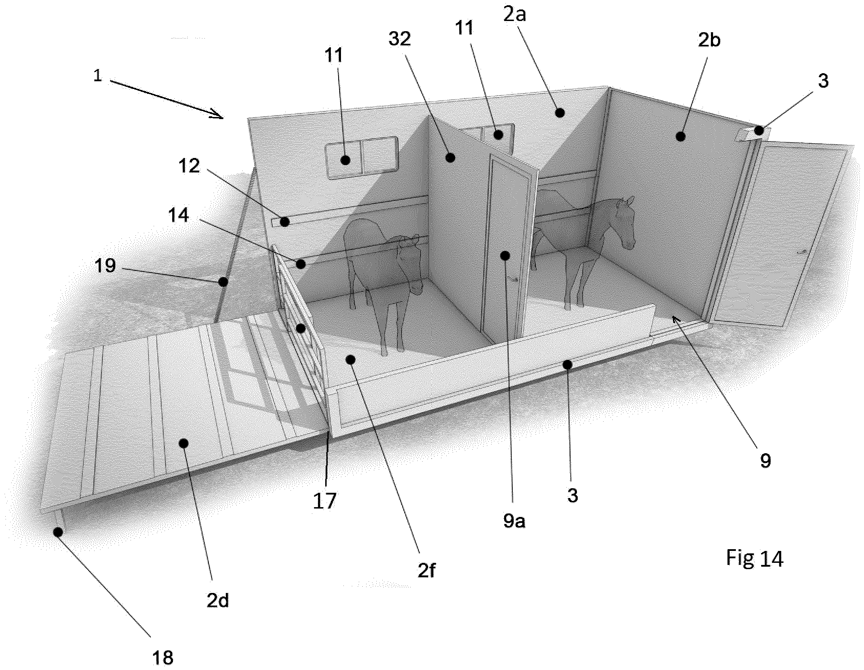

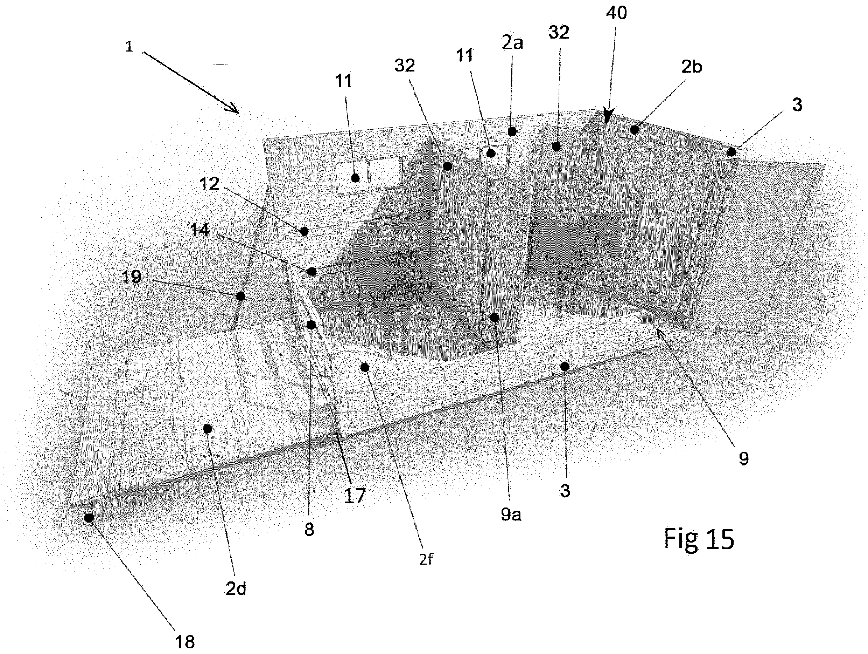

Figures 14 and 15 show how the stable can include at least a supplementary partition (32) which consists of a panel that is enclosed side to side and which has moorings (not shown) to the rails (12, 14). This demarcates compartments for the animals and/or a compartment (40) for other uses (see fig. 15), such as an office, a harness room, etc., and ideally includes an independent access way (9) from outside and/or an interior access way (9a). As many supplementary partitions (22) as thought appropriate can be used to divide out the area inside the container (1)

Now that the nature of the invention has been sufficiently described, as has how it can be realised in practice, it should be pointed out that the finer details of the previously stated and depicted lay-outs in the accompanying pictures can be modified to the extent that they do not disrupt the core principle.

## Claims

1. Transportable stable, of the type that is made up of, at least, one container (1) with enclosures mounted in a self-supporting framework (3) of metal profiles that is comprised of perimetric enclosures (2a, 2b, 2c, 2d), consisting of larger side enclosures (2a, 2c), a front enclosure (2b) and a foldout, heavy load-bearing rear enclosure (2d); an upper enclosure (2e) and a lower weight-resistant enclosure (2f); and restraining devices, consisting of vertical partitions for stabling (7, 8) and/or interior supplementary partitions (32). **This is distinguishable because** at least one of the perimetric enclosures (2a, 2b, 2c, 2d) includes unfolding extensions (100) that consist of flat elements (101, 102, 103) that are joined to each other and/or to the rest of the container (1) by means of joints (110, 111, 112) that allow them to be deployed.

2. Transportable stable as per claim 1 **distinguishable because** the extensions (100) are provided on at least one of the larger side enclosures (2a, 2c) of the container (1).

3. Transportable stable as per any of the previous claims **distinguishable because** the extensions (100) include rooves (101) that are joined to the upper part of the corresponding enclosure (or structure) of the container (1) via primary joints (110) and also include devices to maintain the opened out position.

4. Transportable stable as per claim 3 **distinguishable because** the devices to hold the rooves in the open position (101) include some supports (120) positioned at the opposite side of the roof (101) relative to the primary joints (110).

5. Transportable stable as per claim 4 **distinguishable because** the supports (120) include a second set of joints (111) at the top to connect with the corresponding roof (101).

6. Transportable stable as per either of claims 4 or 5 **distinguishable because** the supports (120) consist of additional enclosures (102) that are parallel to the container enclosures which the corresponding rooves (101) are attached to by joints.

7. Transportable stable as per claim 6 **distinguishable because** the additional enclosures (102) include window holes (105).

8. Transportable stable as per any of the previous claims **distinguishable because** the extensions (100) include floors (103) that are joined to the lower part of the corresponding enclosure (or structure) of the container (1) via third joints (112).

9. Transportable stable as per claim 8 **distinguishable because** the floors (103) include connecting mechanisms (116) to house and stabilise the supports (120) and/or additional enclosures (102).

10. Transportable stable as per any of the previous claims **distinguishable because** the container (1) includes extendable legs (130) for autonomous unloading that consist of perimetric cylinders (131), the extendable sections of which (132) reach beyond the height of the loading platform (200) of the container (1).

11. Transportable stable as per claim 10 **distinguishable because** the cylinders (131) are positioned on the corners of the container (1).

12. Transportable stable as per either of previous claims 10 or 11 **distinguishable because** the cylinders (131) are held in place by mountings (133) that can open out from the perimeter of the container (1), while the container (1) includes housing (134) to push the mountings (133) into and hold the cylinders (131) in an unextended position.

13. Transportable stable as per claim 12 **distinguishable because** the housing spaces (134) include aerodynamic covering doors (135).

14. Transportable stable as per either of previous claims 12 or 13 **distinguishable because** the mountings (133) are joined to the container (1) via a fourth set of joints (137).

15. Transportable stable as per any of the previous claims **distinguishable because** the inside vertical stabling partitions (7, 8) comprise primary interior partitions (7) which consist of a framework of bars (21) with a primary double articulated movable mooring (22) that is attached to interior lengthwise rails (12, 14) on one of the larger enclosures (2a) and at least a
second mooring (23) attached to the first rail (12) on the larger enclosure on the opposite side (2c); and/or some side-to-side panels to be set up just as easily either inside the container (1) in transit or in the areas occupied by the extensions (100) in a folded-out position.

16. Transportable stable as per claim 15 **distinguishable because** the side-to-side panelling includes window spaces (105).
